Europäisches Patentamt

European Patent Office

Office européen des brevets

(11) Publication number: 0 200 428 B1

# EUROPEAN PATENT SPECIFICATION

(45) Date of publication of patent specification: 16.12.92  (51) Int. Cl.⁵: **C04B 41/72**

(21) Application number: **86302888.2**

(22) Date of filing: **17.04.86**

The file contains technical information submitted after the application was filed and not included in this specification

(54) **Removal of chlorides from concrete.**

(30) Priority: **17.04.85 NO 851521**

(43) Date of publication of application:
**05.11.86 Bulletin 86/45**

(45) Publication of the grant of the patent:
**16.12.92 Bulletin 92/51**

(84) Designated Contracting States:
**AT BE CH DE FR GB IT LI LU NL SE**

(56) References cited:
**BE-A- 795 304**
**NL-A- 7 414 461**

**MATERIALS PERFORMANCE, November 1976, pages 21-26, Houston, US; J.E. SLATER et al.: "Electrochemical removal of chlorides from concrete bridge decks"**

**CHEMICAL ABSTRACTS, vol. 88, no. 4, 23th january 1987, page 226, abstract no. 26817p, Columbus, Ohio, US; C. LOWICKI et al.: "Lime decontamination. Methods of decontaminating hydrogen chloride-coated reinforced concrete elements".**

(73) Proprietor: **Norwegian Concrete Technologies A.S.**
**Holtet 45**
**N-1320 Stabekk(NO)**

(72) Inventor: **Vennesland, Oystein**
**Hoiseth Moholtan**
**N-7000 Trondheim(NO)**
Inventor: **Opsahl, Ole Arnfinn**
**Skogfaret 118**
**N-2020 Skedsmokorset(NO)**

(74) Representative: **Russell-Rayner, Albert Patrick Business Centre Avenue One Business Park Letchworth Garden City Hertfordshire SG6 2HB(GB)**

# Description

The present invention is concerned with the removal of chlorides from concrete and more particularly from reinforced concrete.

In practice, very serious problems arise in reinforced concrete constructions as a result corrosion of the reinforcement metal. The primary reason for the corrosion of the reinforcement is that the concrete adjacent to the reinforcement loses its ability of corrosion protection as a result of the formation of carbonate or because of a high chloride content.

When carrying out repairs to concrete constructions which have been damaged by corrosion it is essential that any chloride contaminated concrete or concrete that has been exposed to carbonate formation adjacent to the reinforcement is removed before applying repair concrete, the latter normally being applied by spraying. A similar need to remove contaminated material also applies in areas in which the development of the damage is small.

It is very important to remove all of the contaminated region or regions since if such a region is not removed the damage will in a short time reappear and progressively increase.

Concrete which has ben damaged by corrosion can be removed by chiselling. This operation is expensive, particularly when required, on vertical and/or downwardly facing surfaces.

Where the corrosion of the reinforcement has been caused by a too high chloride content, it has been proposed to remove the chlorides by the use of electrical energy in the form of direct current.

It is known to remove chlorides from concrete by the use of electric currents. One such proposal is disclosed in Slater, J.E., Materials Performance, November 1976, pp 21-26. The method disclosed by Slater involved applying an electric field between the reinforcement and an electrolyte provided on the concrete surface with the reinforcement serving as the negative pole of the associated electrical circuit. Because of the electric field the negative chloride ions will migrate through the concrete away from the negative electrode and out into the electrolyte where they are oxidized to produce chlorine gas at the positive electrode or react chemically with components in the electrolyte. The rate of the chloride transport, also called electromigration depends upon the electric field intensity.

Slater's experiments were carried out on chloride contaminated bridge decks where reinforcement had corroded. As the electrolyte Slater used a Ca(OH) - solution, both with and without an ion exchanger. Without the ion exchanger the chlorine gas developed at the electrodes, the latter being platinized titanium electrodes. By means of wooden frames arranged to form a liquid seal against the concrete surface the deck was divided into sections of 3.5 square metres that were individually treated. Slater used voltages of between 100 and 120 Volts, whilst the current varied between 28 and 100 Amperes per section. With these levels of current and voltage up to 90% of the chlorides were removed within 24 hours.

However, the technique proposed by Slater has not proved practically useful. The reasons for this include :-

1. The high amounts of power that Slater proposes as necessary are prohibitive, both for safety and security factors (minimum 54 Volts) and economical reasons (in a surface of 100 square metres a generator that can supply 100 Volts at a current level of at least 1350 Amperes is required);

2. The Slater method is suitable only for treating the upper surface of horizontal plates or slabs since a liquid electrolyte is used; and

3. Thus according to the description in Slater the method proposed is intended for removing of chlorides in concrete on the upper surface of horizontal slabs. The method proposed by Slater for the removal of chlorides in concrete on horizontal surfaces is expensive as compared with simple mechanical methods since the removal of concrete from horizontal surfaces by mechanical methods is a relatively simple operation and is therefore not expensive.

It is a main object of the present invention to provide a method that requires smaller amounts of electrical energy and which can be used not only on horizontal surfaces but also on other surfaces and that is additionally less expensive than the known method.

According to the invention there is provided a method for for the removal of chlorides from concrete reinforced by at least one reinforcement member embedded therein, by the application of direct voltage between at least one said reinforcement member acting as an internal electrode and an external electrode in electrical contact with the concrete characterised by the steps of

(a) applying an electrically conductive net to said concrete in such manner as to form an external electrode which is distributed on an adjacent concrete surface;

(b) encapsulating said net with a layer of electrolyte which contacts with any adjacent concrete surface so as to ensure effective electrical contact between the net and any said concrete surface adjacent to the net; said electrolyte being electrically conductive; viscous; self-adhering to any concrete surface to which it is applied so as to be able to form a self-adherent coating on any such concrete surface; remaining in its viscous condition throughout chloride removal, and being readily removable from any concrete surface to which it has been applied;

(c) applying direct voltage to a value between 3 to 15 Volts and at a correspondingly low current level between the internal and external electrodes in such electrical polarity sense that chloride ions within the concrete are caused to migrate through the concrete towards the surface (5) thereof adjacent to the external electrode and into the adjacent electrolytic layer;

(d) monitoring the chloride migration level in said electrolyte and stopping application of the direct current when the level reaches a predetermined concentration; and

(e) removing said electrolyte and the external electrode from the concrete surface following attainment of the required level of chloride removal.

In the method of the present invention even though the chemical treatment required a longer time than that proposed by Slater the electrical energy requirements have been found to be dramatically reduced.

Furthermore, it has been found preferable to use an electrolyte that is different from that proposed by Slater in order that other types of surface can be electrolytically treated. The main demands on such an electrolyte are that it should have a high conductivity and that it should be able to adhere to vertical and other non-horizontal surfaces and also to downwardly facing surfaces. The electolyte must also be easy to remove and must be such that it does not cause a reduction in the adhering ability of any repair concrete that is to be subsequently applied to the concrete surface.

It is also preferable that the electrolyte can also be applied by using the same equipment as that used in connnection with the application of the subsequent repair concrete.

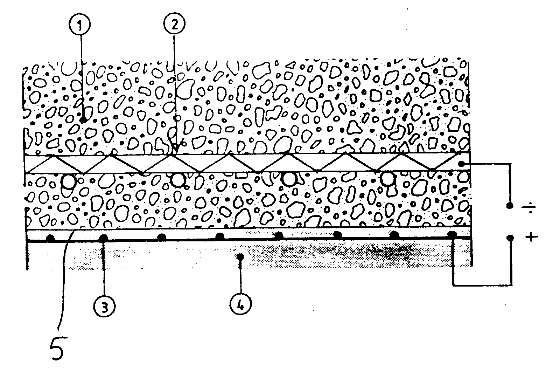

For a better understanding of the invention the method of the invention will be considered in greater detail in relation to the accompanying drawing, the single figure of which is a vertical section through a concrete construction with reinforcement, the figure schematically illustrating means for the accomplishment of the invention.

The concrete construction 1 has reinforcement 2, a downwardly facing surface 5. An electrode net 3 is secured to the region of the concrete construction that is to be treated by the method of the invention, that is the surface 5. A coating 4 of a material having electrolytic properties is applied to the surface 5 to be treated in such manner that it effectively encapsulates the net 3. The reinforcement, i.e., outer member thereof, of the concrete constuction and the electrode net 3 are respectively connected to the negative and positive poles of a direct current source respectively. As indicated in the Figure a negative earth system can be used.

The method of the invention can be carried out as follows:

Initially core samples are removed from the reinforced concrete to enable determination of the content of chloride. Thereafter graphite electrode nets are fastened to the surface of the reinforced concrete by, for example "shoting" or other means for fixing the net to the concrete surface 5.

The electrodes used can be stiff or flexible as thought convenient.

Each net 3 has a terminal for connection to the current source. A layer of viscous medium that can absorb chlorides and which retains these properties for a sufficient length of time for the treatment time period of the method of the invention is then applied to the concrete and over the net 3. The layer comprises a material or mixture of materials such that the layer has the properties of being able to adhere to concrete surfaces, exhibiting electrolytic action, and also at the end of a treatment process to be easily removable from the concrete surface to which it has been applied. One such material is known under the name:- retarded gunite. Other suitable materials can comprise conductive paints and gels.

The layer can have a thickness according to the characteristics of the material or materials being used. Thus the thickness can have a general range of thickness within the range 1 to 30 millimetres. For practical reasons such as convenience, economy, etc., the thickness range can be 10 to 20 millimetres. It will be understood that other thicknesses could be used if considered more suitable.

An electrical energy supply is then connected between the reinforcement metal and the net. This supply is of a very low voltage as compared with the proposals of Slater and is between 3 to 15 volts a particular range when gunite is used being 6 to 12 volts. The current levels are likewise correspondingly low.

During the treatment process samples are taken from the gunite in order to monitor the increase in the chloride content thereof. After a sufficient time, depending upon the content of chloride in the concrete, core samples are taken and are analysed with regard to the chloride content thereof.

The electolytic coating that is applied, which in the example is retarded gunite, is easy to remove after it has been used, because gunite can be removed by water washing or by simple mechanical means. When the gunite has been removed the graphite nets are removed and the surface of the thus treated concrete is sandblasted. The repair concrete is sprayed onto the sandblasted surface by preferably using the same equipment as was used for the application of the electrolytic coating.

The use of the coating or layer 3 has been found not to impair, that is reduce, the adhering ability of the repair concrete.

It has been found that the method of the present invention demonstrates a considerable improvement over the teaching of the prior art. By using the method in accordance with the invention the required amount of electrical energy can be substantially reduced. Furthermore, by reason of the non-liquid state of the electolyte it is possible to treat surfaces other than upwardly facing horizontal surfaces. In addition, the method is less expensive than the known methods.

## Claims

1. A method for the removal of chlorides from concrete reinforced by at least one reinforcement member embedded therein, by the application of direct voltage between at least one said reinforcement member (2) acting as an internal electrode and an external electrode in electrical contact with the concrete comprising the steps of

(a) applying an electrically conductive net (3) to said concrete in such manner as to form an external electrode which is distributed on an adjacent concrete surface (5);

(b) encapsulating said net (3) with a layer of electrolyte (4) which contacts with any adjacent concrete surface (5) so as to ensure effective electrical contact between the net and any said concrete surface adjacent to the net; said electrolyte (4) being electrically conductive; viscous; self-adhering to any concrete surface to which it is applied so as to be able to form a self-adherent coating on any such concrete surface; remaining in its viscous condition throughout chloride removal, and being readily removable from any concrete surface to which it has been applied;

(c) applying direct voltage to a value between 3 to 15 Volts and at a correspondingly low current level between the internal and external electrodes (2,3) in such electrical polarity sense that chloride ions within the concrete are caused to migrate through the concrete (1) towards the surface (5) thereof adjacent to the external electrode (3) and into the adjacent electrolytic layer (4);

(d) monitoring the chloride migration level in said electrolyte and stopping application of the direct current when the level reaches a predetermined concentration; and

(e) removing said electrolyte and the external electrode from the concrete surface following attainment of the required level of chloride removal.

2. A method as claimed in claim 1, and characterised in that the electrolyte is characterised by being a gel.

3. A method as claimed in claim 1 or 2, and characterised in that the electrolyte comprises Gunite.

4. A method as claimed in claim 1, and characterised in that the electrolyte is a conductive paint.

5. A method as claimed in claim 1, 2, 3 or 4, and characterised in that the removal of the electrolyte is effected by water washing.

6. A method as claimed in claim 1,2,3,4 or 5, and characterised in that the net electrode is formed from graphite fibres having high electrical conductivities.

7. A method as claimed in claim 1,2,3,4,5 or 6, and characterised in that the electrolyte (4) is applied to the outer surface (5) of the concrete by spraying thereby facilitating the application of the electrolyte to the concrete whether or not the surface(s) (5) of the concrete to which the electrolyte is applied is/are horizontal, is/are vertical and/or is/are inclined to the vertical or horizontal.

8. A method as claimed in any previous claim 1, to 7, and characterised by applying sufficient electrolyte to a provide a layer of electrolyte having a thickness between 10 to 20 millimetres.

9. A method as claimed in any previous claim 1 to 8, and characterised by the additional steps of of sand blasting the outer surfaces(s) of a concrete structure following choloride removal and applying a layer of repair concrete to the sand blasted surface.

10. A method as claimed in any previous claim 1 to 9, and characterised in that, the voltage applied between the internal and external electrodes lies within the range 6 to 12 volts when the electrolyte includes Gunite.

## Patentansprüche

1. Verfahren zur Beseitigung von Chloriden aus Beton, welcher durch mindestens ein darin eingebettetes Armierungselement armiert ist, durch Anlegen einer Gleichspannung zwischen mindestens einem der erwähnten Armierungselemente (2), welches als interne Elektrode wirkt, und einer äusseren Elektrode, die in elektrischem Kontakt mit dem Beton steht, bestehend aus den Schritten

(a) Anbringen eines elektrisch leitenden Netzes (3) an den besagten Beton in der Art, dass eine externe Elektrode gebildet wird, die auf einer benachbarten Betonoberfläche (5) verteilt ist;

(b) Einhüllen des besagten Netzes (3) mit einer Schicht eines Elektrolyten (4), welcher einen Kontakt mit der benachbarten Betonoberfläche (5) herstellt, um sicherzustellen, dass eine tatsächliche elektrische Verbindung zwischen dem Netz und jeder der besagten, dem Netz benachbarten Betonoberflachen besteht, wobei der besagte Elektrolyt (4) elektrisch leitend, viskos und selbsthaftend an jeglicher Betonoberfläche ist, auf die er aufgebracht wird, sodass er eine selbsthaftende Schicht auf einer Betonoberfläche bildet, wobei er während der Chloridentfernung viskos bleibt und von jeder Betonoberfläche, auf welche er aufgebracht wurde, einfach zu entfernen ist;

(c) Anlegen einer Gleichspannung mit einem Wert zwischen 3 bis 15 Volt und einem entsprechend niedrigen Strom zwischen der internen und externen Elektrode (2,3) mit einer solchen elektrischen Polarität, dass die Chloridionen innerhalb des Betons durch den Beton (1) zur Oberfläche (5) zu den benachbarten externen Elektroden (3) und in die benachbarte Elektrolytschicht (4) wandern;

(d) Ueberwachen der Rate der Chlorid-Migration im besagten Elektrolyt und Beendigung der Gleichstromzufuhr, wenn die Konzentration einen vorgegebenen Wert erreicht hat; und

(e) Entfernen des besagten Elektrolyten und der externen Elektrode von der Betonoberfläche nach Erreichen des gewünschten Masses der Chloridentfernung.

2. Verfahren gemäss Anspruch 1, dadurch gekennzeichnet, dass der Elektrolyt ein Gel ist.

3. Verfahren gemäss Anspruch 1 oder 2, dadurch gekennzeichnet, dass der Elektrolyt Gunit enthält.

4. Verfahren gemäss Anspruch 1, dadurch gekennzeichnet, dass der Elektrolyt ein leitender Anstrich ist.

5. Verfahren gemäss Anspruch 1, 2, 3, oder 4, dadurch gekennzeichnet, dass das Entfernen des Elektrolyten durch Waschen mit Wasser erfolgt.

6. Verfahren gemäss Anspruch 1, 2, 3, 4 oder 5, dadurch gekennzeichnet, dass die Netzelektrode aus Graphitfasern besteht, die eine hohe elektrische Leitfähigkeit haben.

7. Verfahren gemäss Anspruch 1, 2, 3, 4, 5 oder 6, dadurch gekennzeichnet, dass der Elektrolyt (4) an der äusseren Betonoberfläche durch Besprühen aufgetragen wird, wodurch das Anbringen des Elektrolyten auf den Beton erleichtert wird, gleichgültig, ob die Oberfäche(n) des Betons, auf dem der Elektrolyt aufgetragen wird, horizontal, vertikal und/oder zur Vertikalen oder Horizontalen geneigt ist (sind).

8. Verfahren gemäss einem der vorhergehenden Ansprüche 1 bis 7, dadurch gekennzeichnet, dass genügend Elektrolyt aufgetragen wird, um eine Elektrolytschicht zu erhalten, die eine Dikke zwischen 10 und 20 mm hat.

9. Verfahren gemäss einem der vorhergehenden Ansprüche 1 bis 8, dadurch gekennzeichnet, dass zusätzlich die äussere(n) Oberfläche(n) einer Betonkonstruktion anschiessend an die Chloridentfernung sandgestrahlt werden, und danach eine Schicht Reparaturbeton auf die sandgestrahlte Oberfläche aufgebracht wird.

10. Verfahren gemäss einem der vorhergehenden Ansprüche 1 bis 9, dadurch gekennzeichnet, dass die angelegte Spannung zwischen der internen und externen Elektrode im Bereich von 6 bis 12 Volt liegt, wenn der Elektrolyt Gunit enthält.

**Revendications**

1. Procédé d'enlèvement des chlorures du béton armé par au moins un élément de renforcement noyé en son intérieur, dans lequel on applique une tension continue entre au moins ledit élément de renforcement (2) jouant le rôle d'une électrode interne et une électrode externe électriquement en contact avec le béton, comprenant les étapes consistant :

(a) à appliquer un filet (3) électriquement conducteur sur ledit béton de façon à former une électrode externe répartie sur une surface (5) en béton adjacente,

(b) à noyer ledit filet (3) dans une couche d'électrolyte (4) en contact avecn'importe quelle surface (5) en béton adjacente de façon à assurer un contact électrique effectif entre le filet et n'importe quelle surface en béton adjacente au filet ; ledit électrolyte (4) étant électriquement conducteur, visqueux, pouvant autoadhérer sur n'importe quelle surface en béton sur laquelle il est appliqué de façon à pouvoir former un revêtement auto-adhésif sur cette surface en béton, restant dans sa forme visqueuse durant l'enlèvement des chlorures, et pouvant être facilement ôté de n'importe quelle surface en béton sur laquelle il a été appliqué;

(c) à appliquer, entre les électrodes interne et externe (2, 3), une tension continue comprise entre 3 et 15 volts et avec un courant correspondant faible, selon un sens de polarité électrique tel que les ions chlorure présents à l'intérieur du béton puissent migrer dans le béton (1) vers la surface (5) de celui-ci adjacente à l'électrode externe (3) et à l'intérieur de la couche électrolytique (4) adjacente;

(d) à contrôler le niveau de migration des chlorures dans ledit électrolyte et à stopper l'application du courant continu lorsque le niveau atteint une concentration prédéterminée ; et

(e) à ôter ledit électrolyte et ladite électrode externe de la surface en béton lorsque le niveau requis d'enlèvement des chlorures est atteint.

2. Procédé selon la revendication 1, caractérisé en ce que l'électrolyte est un gel.

3. Procédé selon la revendication 1 ou 2, caractérisé en ce que l'électrolyte comprend de la Gunite.

4. Procédé selon la revendication 1, caractérisé en ce que l'électrolyte est une peinture conductrice.

5. Procédé selon la revendication 1, 2, 3 ou 4, caractérisé en ce que l'enlèvement de l'électrolyte est effectué par lavage à l'eau.

6. Procédé selon la revendication 1, 2, 3, 4 ou 5, caractérisé en ce que l'électrode en filet est formée de fibres de carbone présentant des conductivités électriques élevées.

7. Procédé selon la revendication 1, 2, 3, 4, 5 ou 6, caractérisé en ce que l'électrolyte (4) est appliqué sur la surface extérieure (5) du béton par pulvérisation facilitant ainsi l'application de l'électrolyte sur le béton, que la (les) surface(s) (5) du béton sur laquelle (lesquelles) l'électrolyte est appliqué soi(en)t ou non horizontale(s), verticale(s) et/ou inclinée(s) par rapport à la verticale ou par rapport à l'horizontale.

8. Procédé selon l'une des revendications précédentes 1 à 7, caractérisé en ce qu'il consiste à appliquer suffisamment d'électrolyte pour former une couche d'électrolyte présentant une épaisseur comprise entre 10 et 20 millimètres.

9. Procédé selon l'une des revendications précédentes 1 à 8, caractérisé en ce qu'il comprend les étapes supplémentaires consistant à décaper par jet de sable la ou les surface(s) extérieure(s) d'une structure en béton après l'enlèvement des chlorures et à appliquer une couche de réparation en béton sur la surface décapée parjet de sable.

10. Procédé selon l'une des revendications précédentes 1 à 9, caractérisé en ce que, lorsque l'électrolyte inclut de la Gunite, la tension appliquée entre les électrodes interne et externe est comprise dans une fourchette allant de 6 à 12 volts.